Europäisches Patentamt

(19) European Patent Office

Office européen des brevets

(11) Publication number: **0 131 383**
**A2**

(12) **EUROPEAN PATENT APPLICATION**

(21) Application number: **84303863.9**

(22) Date of filing: **07.06.84**

(51) Int. Cl.⁴: **F 16 C 9/04**

(30) Priority: **09.06.83 US 502581**

(43) Date of publication of application:
**16.01.85 Bulletin 85/3**

(84) Designated Contracting States:
**DE FR GB IT SE**

(71) Applicant: **AUTOMOTIVE ENGINE ASSOCIATES**
**301 South Blount Street**
**Madison Wisconsin 53703(US)**

(72) Inventor: **Showalter, Merle Robert**
**301 South Blount Street**
**Madison Wisconsin 53703(US)**

(74) Representative: **Boydell, John Christopher et al,**
**Stevens, Hewlett & Perkins 5 Quality Court Chancery Lane**
**London, WC2A 1HZ(GB)**

(54) **Connecting rod.**

(57) A connecting rod design for minimizing friction and maximizing load bearing capacity of reciprocating crankpin assemblies, such as those found in internal combustion engines. Rather than the conventional journal bearing arrangement, the compressive load between wrist pin and journal center is borne by a hydrostatically supported pivoted pad slider arrangement which operates under mechanical conditions which superimpose pivoted pad slider and squeeze film fluid mechanics to maximize film stability and minimize friction. Inertial loads perpendicular to the wrist pin journal center line are borne by smaller hydrostatically supported pivoted pad sliders. Tensile loads are borne by a relatively flexible rod cap bearing which deflects to maximize squeeze film forces.

FIG. 1

EP 0 131 383 A2

CONNECTING ROD

BACKGROUND AND OBJECTS

Crankshaft connecting rod assemblies are common throughout industry, and are most common in reciprocating piston internal combustion engines. In all applications, it is highly desirable that the connecting rod and journal bearing have the capacity to bear very heavy loads with full-film lubrication. It is particularly desirable to minimize the friction between the crankshaft journal and the connecting rod bearing. For diesel engines, securing enough oil film stability for adequate durability has required that the big end connecting rod bearings be made very large and tightly fitting. These bearings make a significant contribution to diesel engine friction. For gasoline engines, connecting rod big end bearings limit engine durability in heavily loaded applications.

It is the purpose of the present invention to provide a connecting rod with modifications of the big end bearing so that the connecting rod operates with superior film stability, increased load bearing capacity and reduced friction. Compressive loads between wrist pin center and big end journal center are borne with a hydrostatically supported pivoted pad slider bearing. The radius of curvature of the pivoted pad surface contacting the journal is nearly matched to that of the journal, to maximize film stability as a pivoted pad slider and also maximize squeeze film effects to further reduce friction. This hydrostatically supported pivoted pad slider bearing with the matched radius of curvature of the pad to the radius of curvature of the journal should provide much higher load bearing capacity and lower operating friction than that of a conventional journal bearing. The hydrostatically supported pivoted pad provides film stability without requiring that the clearance between the crankshaft journal and other surfaces of the bearing be too small. This eliminates the trade-off between journal bearing clearance and friction. However, this hydrostatically supported large pad only takes direct compression forces between the wrist pin and the journal. Smaller hydrostatically supported pivoted pads take the inertial forces perpendicular to the wrist pin journal centerline. These side force bearing pads are small, since they only need to take heavy loads at high engine speeds.

Tensile forces along the line between wrist pin center and big end journal center are taken with a modified connecting rod cap which is designed to be sufficiently flexible so that it conforms under load in a manner which maximizes squeeze film effects. Squeeze film pressures occur when two surfaces separated by an oil film approach each other. Since the con rod operates under conditions where there is load reversal on every full cycle, and since the con rod is provided with oil reservoirs to assure flooding, the clearance between the crankshaft journal and the con rod cap bearing surface will be filled with oil. When loads are applied to the con rod cap bearing, these loads will act to squeeze out this film of oil as the crankshaft journal and bearing surfaces are forced together. The viscosity of the oil will resist the high shear flow required to squeeze out this oil film, generating squeeze film pressure between the con rod cap bearing and the crankshaft journal. Squeeze film fluid mechanics is explained in "Squeeze Films," Chapter 7 of the Standard Handbook of Lubrication Engineering, O'Connor and Boyd, editors, McGraw-Hill Company, 1968. Instantaneous squeeze film forces between a journal and journal bearing are maximized when the oil film thickness is constant around the loaded $180^{\circ}$ circumference between the crankshaft and journal bearing. The flexible con rod cap bearing deforms so as to achieve this constant oil film thickness. Specifically, the con rod cap bearing operates elastically as a "strap" which is strong in tension, but compliant in bending in comparison to the deflections required of it, so that the "strap" adjusts its shape to produce uniform inward radial forces on the crankshaft journal. The squeeze films formed with this flexible "strap" cap bearing have much higher film thicknesses and lower friction than would be possible with a more rigid con rod cap bearing arrangement functioning as a conventional journal bearing. The combination of a hydrostatically supported pivoted slider for direct compression loads, smaller pivoting pads for side loads, and a flexible strap con rod cap bearing forms a con rod bearing design capable of improved load bearing capacity and reduced friction.

IN THE DRAWINGS

Figure 1 is a view of the connecting rod along the journal axis showing the hydrostatically supported direct compression pad, the side load bearing pads, and the flexible bearing con rod cap.

Figure 2 is a side view of the connecting rod perpendicular to the journal axis.

Figure 3 is a view along the Figure 3 section lines of Figure 1 further illustrating the hydrostatically supported direct compression pad, the side load bearing pads and other geometry.

Figure 4 is a view of one of the side load bearing pads on its journal contacting side.

Figure 5 is a view of the side load bearing pad of Figure 4 on its hydrostatic side.


DETAILED DISCUSSION

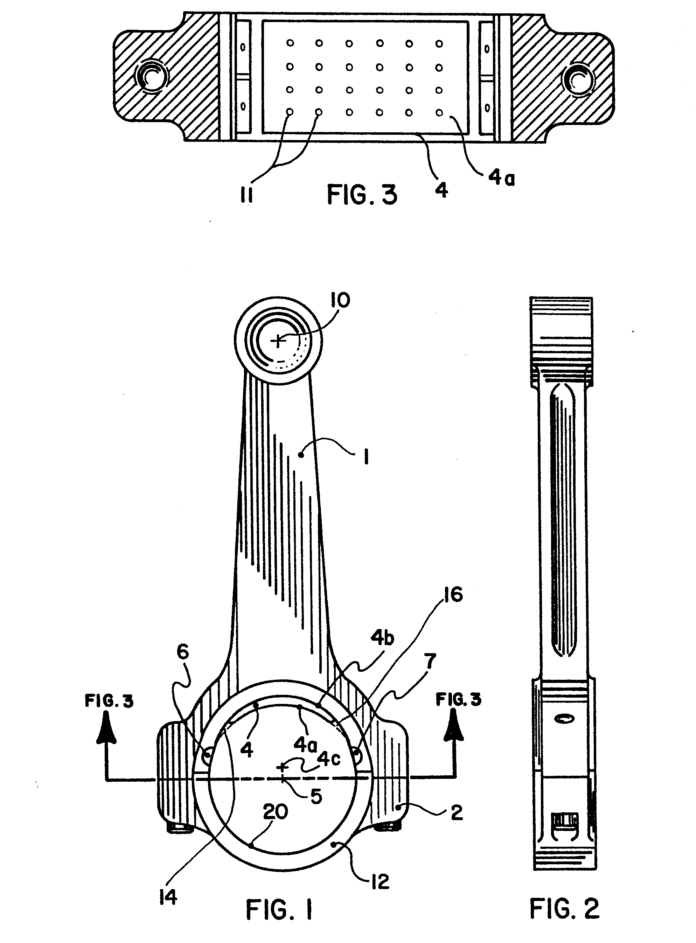

See Figure 1. A connecting rod 1 connects a wrist pin with center 10 and a journal bearing with center 5. The journal bearing arrangement of the bearing centered on 5 is unconventional. Direct compression forces between point 5 and point 10 are borne by a hydrostatically supported pivoted pad slider 4 which has a journal contacting surface 4a which is closely matched but very slightly larger than the radius of curvature of the crankshaft journal. Pad 4 has hydrostatically supported free floating surface 4b matched to a corresponding surface of the connecting rod 1, where cylindrical surface 4b is centered on point 4c. Holes communicating between surface 4a and 4b take oil under pressure from the wedge film in contact with surface 4a and supply pressurized oil to surface 4b so that pad surface 4b is supported as a hydrostatic bearing with a full oil film separating surface 4b from the corresponding surface of the connecting rod. The full film support of surface 4b means that pad 4 is free to pivot about virtual center point 4c. Pad 4 is a hydrostatically supported pivoted pad slider bearing.

Figure 3 is a view which shows surface 4a and shows pressure pickup points 11 which supply oil to the hydrostatic support surface 4b. Referring again to Figure 1, the connecting rod 1 has a connecting rod cap 2. The journal bearing support geometry of connecting rod cap 2 has a thin strap-like bearing section 12, which is strong in tension but compliant in bending. This compliant section 12 deforms in a manner which acts to maximize its load bearing capacity in squeeze film mode. When the connecting rod is unloaded, the journal contacting surface 20 of cap 2 has a radial clearance with the journal one to two times larger than the clearance of current engine practice. There should be a similar radial clearance between pad 4 and the crankshaft journal when the crankshaft journal is centered on point 5. The radius of curvature of hydrostatic pad surface 4a should be closely matched to the crankshaft journal radius of curvature.

The geometry of pad 4 with respect to the journal denoted by the dashed lines produces clearance volumes 14 and 16 between pad 4 and side load bearing pads 6 and 7.

Because of the clearances 14 and 16, it is desirable that the oil supply galleries in the crankshaft be fitted with restrictors, since the journal bearing assembly of the present invention is not as restrictive as that of conventional journal bearings.

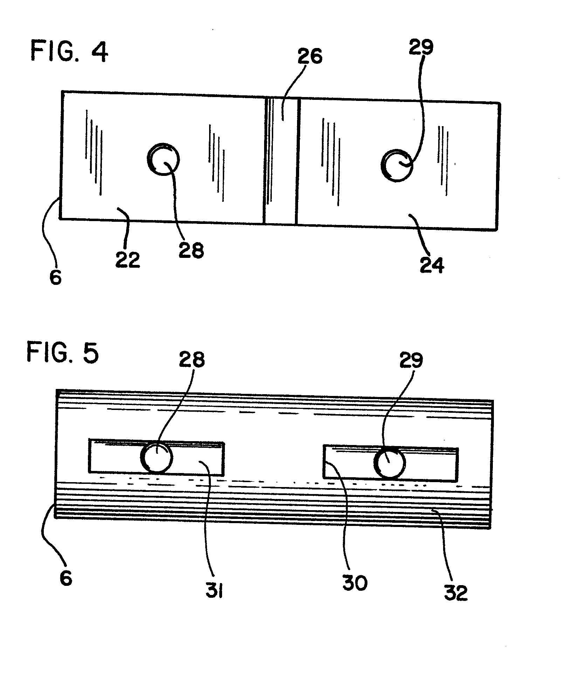

As the crankshaft rotates, inertial forces will generate side loads which are resisted by smaller hydrostatically supported pads 6 and 7. Since the inertial forces bearing on pads 6 and 7 are proportional to the square of crankshaft rotating velocity, the loads bearing on the pads are only large at high rotating speeds. In consequence, the journal contacting pad areas of pads 6 and 7 can be quite small. Figure 4 is a view of one of the side load bearing pads on its journal contacting side. Figure 5 is a view of the same side load bearing pad on its hydrostatic side. See Figure 4. The journal contacting surface has hydrodynamic pad surfaces 22 and 24 separated by a relieved central section 26 which is used to assure that oil from the oil reservoirs can pump to the connecting cod cap bearing. Central to surfaces 22 and 24 are wedge film pressure connection holes 28 and 29 which each feed to hydrostatic film distribution patches 30 and 31 on the hydrostatic film side shown in Figure 5. High pressure oil within groove 30 supports hydrostatic surface 32 as a hydrostatic bearing so that the pad structure acts as a hydrostatically supported pivoted pad slider bearing in a manner analogous to that described with respect to pad 4.

The connecting rod bearing cap 2 has the journal contacting surface 20 supported by flexible section 12, so that the surface 20 will bend to conform to the forces of the crankshaft journal in a fashion which will maximize squeeze film effects between surface 20 and the journal. The tensile forces bearing against surface 20 are only significant at high engine speeds, since these forces are primarily inertial forces which are proportional to the square of engine speed. In the high speed regime where the heavy forces on cap section 12 occur, squeeze film lubrication can significantly reduce friction compared to what could be achieved with a rigid journal bearing geometry. Journal contacting surface 20 should be ground directly into the support material of 12 and should be as smooth as possible.

The connecting rod of the present invention operates with improved friction and load bearing capacity. At low speeds, the great majority of the load is borne by hydrostatically supported pivoted pad 4, which bears load in a mode superimposing pivoted pad slider and squeeze film fluid mechanics. Side loads are also borne by small pivoting pad sliders, and tensile loads are borne with a flexible "strap" bearing which maximizes squeeze film effects and should produce excellent film stability and low friction.

0131383

6

IT IS CLAIMED:

CLAIM 1

An assembly for transmitting loads between two parallel crankpins wherein the top crankpin is called the wrist pin and the lower crankpin is called the crankshaft journal, wherein the assembly is split into two main parts each surrounding approximately 180° of the crankshaft journal, wherein the part directly connecting the wrist pin to the crankshaft journal is called the con rod and the smaller part connected to the con rod to enclose the other half circle around the crankshaft journal is called the con rod cap, and the plane at which the con rod and con rod cap meet is called the parting line,

a con rod construction wherein the direct compression loads between said wrist pin and said crankshaft are borne by a hydrostatically supported pivoted pad slider compression bearing engaging said crankshaft journal with the radius of curvature of the journal contacting surface of said pad nearly matched to the radius of curvature of the crankshaft journal, where said pivoted pad has opposite to its journal contacting surface a convex curved pivot surface separated from a closely matched concave surface in the con rod, pressurized oil supply means to support said pivot surface on a hydrostatic oil film so that said pad floats and pivots freely as said pivot surface moves with respect to said matched con rod surface, where there are clearance spaces directly prior to and after said compression pad in the direction of crankshaft journal sliding to provide oil reservoirs, where the connecting rod is also provided with smaller side load bearing hydrostatically supported pivoted pad sliders which bear inertial loads of said con rod perpendicular to the line connecting said journal center and said wrist pin center and which are supported and pivot in a manner analogous to that of the hydrostatically supported pivoted pad compression bearing,

said con rod being connected at the parting line to a con rod cap having a crankshaft journal engaging journal bearing suface in the form of a half cylinder with the radius of curvature of said journal bearing cylindrical surface larger than that of the crankshaft journal,

where the pivoted pad slider compression bearing carries all compressive load between the wrist pin and and the crankshaft journal, the con rod cap half cylindrical bearing surface carries all tensile loads between the wrist pin and the crankshaft journal, and the side load bearing pads carry all loads perpendicular to the wrist pin crankshaft journal center line.

CLAIM 2 The invention as stated in Claim 1 and wherein the con rod cap half cylindrical bearing surface is supported by structural sections thin enough so as to be flexible in bending with respect to the loads to which said bearing is subjected, so that the con rod cap journal bearing surface deforms under load in a manner tending to equalize radial forces and oil film pressures between said bearing surface and said crankshaft journal around said bearing circumference to maximize the effectiveness of the con rod cap bearing as a squeeze film bearing.

CLAIM 3 The invention as stated in Claim 1 and wherein the pressurized oil supply means to support said pivot surface comprises a multiplicity of holes connecting the journal contacting surface of said pad to said pivot surface.

CLAIM 4 The invention as stated in Claim 1 and wherein the bearing surfaces of the pivoting pads and con rod cap are ground directly into the main structural metal of said pads and caps, said bearing surfaces being ground to a high degree of smoothness and hardened for durability.

0131383

1/2

FIG. 3

FIG. 1

FIG. 2

FIG. 4

26    29

22    28    6    24

FIG. 5

28    29

6    31    30    32